# EUROPEAN PATENT SPECIFICATION

(11) **EP 4 442 503 B1**
(45) Date of publication and mention of the grant of the patent: **20.05.2026**
(21) Application number: 24168020.6
(22) Date of filing: 02.04.2024
(51) Int. Cl.: B60N 2/30, B60N 2/60, B60N 2/02, B60N 2/26, B60N 2/20, B60N 2/90, B60N 2/28

(54) **VEHICLE SEAT WITH INTEGRATED CHILD SEATING SYSTEM**
FAHRZEUGSITZ MIT INTEGRIERTEM KINDERSITZSYSTEM
SIÈGE DE VÉHICULE AVEC SYSTÈME DE SIÈGE D'ENFANT INTÉGRÉ

(30) Priority: 03.04.2023 AT 1223 U
(43) Date of publication of application: 09.10.2024
(73) Proprietor: Akoury, Said, 6020 Innsbruck (AT); Meier, Joachim B., 6020 Innsbruck (AT)
(72) Inventor: Akoury, Said, 6020 Innsbruck (AT)
(74) Representative: Lorenz Seidler Gossel Part. mbB

(56) References cited:
- DE-A1- 10 138 854
- US-A1- 2012 228 909
- US-A1- 2018 134 186

## Description

The present invention relates to a vehicle seat for passengers of a vehicle such as an automobile or a van, said vehicle seat comprising a backrest including a backrest body and a rear paneling attached thereto, a seat cushion, and a child seating system integrated into said backrest, wherein said backrest is configured to be foldable onto/towards said seat cushion into a child seating position in which a front side of the backrest faces said cushion and a rear side of the backrest is transformable to at least partly form said child seating system.

So as to transport babies and little children by car, vans or other vehicles for traveling, usually for safety reasons children seat systems specifically adapted to the body and anatomical characteristics of babies and little children are used, wherein such child seating systems usually include a separate baby seat or child seat attached onto the passenger seat. Depending on the type of child seat or baby seat, such separate child/baby seats may be placed onto the seat cushion and/or the front side of the backrest with the supporting concavity facing frontwards or rearwards to have the baby look into the driving direction or rearwardly opposite to the driving direction. So as to increase safety, it is nevertheless recommended to have the baby seated rearwardly, i.e. look rearwardly against the driving direction, to fully support the back and the head of the baby by means of the seat cushion and/or backrest cushion of the child seat when an accident occurs and more particularly, when the vehicle gets into a front crash. Studies of healthcare organizations show that situations should be avoided where the babies are forced to sit into an upright posture with little upper body support which is the case with some conventional baby seats. Furthermore, as indicated by such studies of healthcare organizations, many parents fail to adhere to the manufacturer's safety instructions and tend to use the retainer clips incorrectly, to install the seat belt incorrectly or to use non-recommended products to install the baby seat in the vehicle. Such improper use and installation mistakes may result in serious safety problems.

Another issue with child seating systems is the position of the infant. Many child seats are to be installed on the rear seats of a vehicle what is basically helpful to increase safety. However, the vehicle's driver is hardly in a position to communicate with the baby seated in the rear of the passenger cabinet. So as to allow for communication with the baby and care of the baby, it would be preferable to have the child seat installed on the co-driver's seat and thus, in the front of the passenger cabinet. When installing the child seat on the co-driver's seat, however, it is difficult to allow for easy and safe installation of the child seat, avoiding the aforementioned sources of mistakes such as wrong connection of the fixtures, and at the same time, have the baby oriented rearwardly, i.e. looking rearwardly and/or having the feet further rearwardly than the head, and have the child seat, with its baby receiving concavity, oriented rearwardly to be able to fully support the back and head of the baby when a front-side crash occurs.

An example of a child seating system to be installed on a co-driver's front seat is known from the car model XC90 of manufacturer VOLVO.

Furthermore, prior art document US 9,676,305 B2 shows a vehicle seat with an integrated child seating system, wherein the backrest of the seat can be folded onto the seat cushion and includes a movable child seat backrest which forms a center portion of the backrest and can be moved into a baby receiving position. More particularly, said child seat backrest is connected to the neighboring portions of the backrest by means of a support arm suspension that allows the child seat backrest to be raised from the rear-side of the folded backrest so as to form a rear facing child seat.

Furthermore, US 2012 / 228 909 A1 shows a vehicle seat having a child seating system integrated into the backrest of the seat, wherein the backrest is configured to be foldable towards the seat cushion into a child seating position in which a front side of the backrest faces the seat cushion and a reside of the backrest is transformable to form the child seating system. Further vehicle seats with integrated child seat systems are known from DE 10 138 854 A1 and US 2018 / 134 186 A1.

Although such integrated child seating system solves some of the aforementioned problems, in particular having the child seat always available and having the baby positioned on a co-driver's front seat in a rear-facing orientation, it shows some disadvantages relative to safety and comfort. More particularly, the re-configurable backrest forming the child seat is composed of rigid parts and is not comfortable for the child. Especially when the child is a newborn baby, some baby organs in the body are very sensitive and the baby body requires maximum comfort while being seated or having a short nap in the car. The rather non-ergonomic shape of the child seat of US 9,676,305 B2 may cause serious health problems for newborn babies when the vehicle gets into an accident, and furthermore, due to lack of comfort, the child seat contributes to making the baby fretful and grumpy.

In view of the aforementioned shortages of prior art child seating systems, it is an objective underlying the present invention to provide for an improved child seating system for transporting children and babies by car in a comfortable and safe way. More particularly, it is an objective of the present invention to provide for an improved vehicle seat having an integrated child seating system that can be easily and quickly transformed from an adult transporting configuration into a baby transporting configuration and vice versa. Furthermore, high comfort to resting babies should be achieved without sacrificing safety.

According to the present invention, a vehicle seat as defined by claim 1 is suggested to address the aforementioned objectives. Preferred embodiments of the invention are laid down in the dependent claims.

So as to allow for more comfort and a better fit of the child seating system to a baby's anatomy, it is suggested to open the rear-side of the backrest to opposite sides and to form right and left side supports for the baby by means of the opened portions, whereas additional support to the baby's torso is provided by other portions or elements accommodated in the interior of the backrest. More particularly, it is suggested that the rear-side of the backrest is provided with at least one pair of back lids pivotally supported about pivot axes substantially parallel to each other and spaced apart from each other to pivot from a storage position in which said back lids cover at least part of the child seating system in the interior of the backrest, to a child seating position in which said back lids form right and left side child supports projecting from the rear-side of the backrest and extending along a child receiving recess of the child seating system in the rear-side of the backrest.

Using a plurality of pivotable back lids allows for dividing the transformation of the backrest into smaller sections and furthermore, is space saving as the plurality of back lids may be smaller than one large back lid and thus, do not require lots of space when pivoting the back lids. **In** addition, due to the fact that different sections of the backrest may be opened towards opposite sides, a finer adaption of the side supports to the baby's anatomy may be achieved.

In accordance with a preferred embodiment of the invention, said pivot axes may extend substantially parallel to and/or are symmetrically arranged relative to a virtual upright longitudinal center plane of the vehicle seat, wherein said pivot axes are lying or substantially horizontal when said backrest is in its folded configuration facing the seat cushion. More particularly, said pivot axes may extend along the rear-side of the backrest or, when said rear-side is not planar, but slightly curved or convex or concave, the axes may be arranged substantially tangential to said rear-side. Irrespective of such tangential arrangement, the pivot axes may have a certain spread or may be arranged in a slight V-configuration, i.e. they may define an acute angle between each other which angle may range from 0° to 30° or 0° to 15° what may be considered as "substantially parallel".

Preferably, said pivot axes extend along outer sides of the back lids when said back lids are closed so the back lids may flip about such pivot axes to the outside of the backrest.

Advantageously, said rear-side of the backrest may be provided with two pairs of back lids, wherein each pair of said back lids is supported about a pair of pivot axes substantially parallel to each other and spaced apart from each other to pivot from a storage position to a child seat position and vice versa, wherein in said unfolded child seat position a first one of said pairs of back lids forms right and left side supports for supporting a baby's head and a second one of said pairs of back lids forms left and right side supports for a baby's torso.

Use of such plurality of pairs of pivotable back lids allows for a finer adjustment of the position and/or height and/or inclination of the side supports formed by such back lids in their opened position.

Said two pairs of back lids may, in their unfolded child seat position, differ from each other in terms of clearance between the right and left side supports and/or in terms of an opening angle defined between said left and right side supports.

More particularly, said plurality of pairs of back lids may differ from each other in size. For example, smaller back lids may be used to form right and left side supports for supporting a baby's head, whereas, in comparison thereto, larger back lids may be used to form right and left side supports for supporting a baby's torso. **In** addition or in the alternative, the pivot axes of the different sets of back lids may be positioned differently, in particular in terms of their distance from the aforementioned longitudinal upright center plane of the seat. For example, the pivot axes of the back lids forming side supports for the baby's head may be closer to each other than pivot axes of the back lids forming side supports for the baby's torso. **In** addition or in the alternative, the pivot axes of the different sets of back lids may be arranged at different orientations. For example, the aforementioned angle defining a slight V-configuration may differ from set to set.

According to the invention, said child seat system may includes at least one inflatable child seat cushion which is, in a deflated storage configuration, accommodated in a storage recess in the rear side of the backrest and is, in an inflated child seat configuration, forming a child seat cushion including a free-formed, sculptured support surface adapted to the anatomy of a child's body. Such inflatable child seat cushion does not only provide for a comfortable, smooth and pliable surface supporting a baby, but it allows for shaping the support surface to perfectly match a baby's anatomy irrespective of the restrictions of the storage recess in the rear-side of the backrest in which the child seating system is accommodated in the storage configuration.

Such at least one inflatable child seat cushion may project, in its inflated child seat configuration, from and over the rear side of the backrest and may form a bowl-shaped or trough-shaped child receiving recess which is larger in area than and extends beyond the storage recess in the rear side of the backrest.

More particularly, due to inflation, the child seat may gain a footprint or size that is considerably larger than the storage compartment formed in the rear-side of the backrest in which the child seating system may be accommodated when the seat cushion is deflated. Thus, the inflated seat cushion may not only project from the rear-side of the backrest in a direction substantially perpendicular to the rear-side and thus, may not only raise from the rear-side, but it also may extend over rear-side regions surrounding the storage compartment and/or may extend to the left and/or right and/or to the forward and/or rearward sides beyond the contours of the storage compartment.

Said at least one inflatable child seat cushion may include at least one of the following: at least one headrest cushion, at least one pair of left and right side cushions, a torso cushion and a leg/food cushion.

More particularly, at least one inflatable child seat cushion may be attached to said at least one pair of pivotably supported back lids to be inflated when said at least one pair of back lids is pivoted into its unfolded child seat configuration to form a pair of side cushions.

According to the invention, an inflation controller is provided for controlling inflation of said at least one inflatable child seat cushion in response to pivoting movement and/or pivoting position of said at least one pair of back lids, wherein said inflation controller is preferably configured to automatically inflate said at least one inflatable child seat cushion when said at least one pair of back lids are opened and/or pivoted towards their child seat position, and to deflate said at least one inflatable child seat cushion when said at least one pair of back lids is closed and/or pivoted towards their storage position.

In addition or in the alternative, at least one of said child seat cushions may have a multi-chamber structure including a plurality of separately inflatables chambers so as to provide for different inflation pressures in different regions of the cushion. For example, the torso or back cushion for supporting a baby's backside may have three pressure chambers to provide for, for example, less inflation pressure and thus more comfort in a center section and higher pressure and thus, more support in side sections so as to combine comfort for the baby with save positioning, i.e. keeping the baby in the correct position.

Such inflation controller may include at least one pressure sensor in at least one cushion and/or pressure sensors in each of the chambers of at least one cushion so that inflation pressure may be precisely controlled in response to the pressure signal provided by the at least one pressure sensor.

Said inflation controller or another inflation controller may be configured to provide for variable adjustment of inflation pressure inside the at least one inflatable child seat cushion in the inflated child seat configuration thereof in response to a pressure control signal input via input means, wherein preferably said inflation controller may be configured to provide for independent adjustable inflation pressures in different ones of a plurality of inflatable child seat cushions.

For example, input means such as a turning nob or a slider or a touchscreen may be provided for adjusting the inflation pressure. Parents may turn the nob or input in any other way the desired inflation pressure to select the inflation pressure best for the baby.

So as to make easy movements of the moveable parts of the backrest or more generally, of the seat, an actuation unit for automatic and/or motorized transformation of the backrest from an adult passenger configuration to a child seat configuration includes at least one actuator for pivoting said at least one pair of back lids from their storage position into their child seat position and vice versa, and at least another actuator for folding the backrest from a substantially upright adult position towards/onto the seat cushion into the child seat position and vice versa.

A master controller is provided for coordinating operation of the inflation controller and the actuation unit to coordinate inflation and/or deflation of said at least one inflatable child seat cushion in a manner timely coordinated with movement of said at least one pair of back lids, wherein preferably said master controller is configured to initiate inflation of said at least one inflatable child seat cushion after said at least one pair of back lids has been fully or sufficiently opened and/or to initiate closing of said at least one pair of back lids after said at least one inflatable child seat cushion has been fully or sufficiently deflated.

In addition or in the alternative, said master controller also may be configured to issue a deactivation signal to an airbag device when said backrest is folded into its child seating position and to issue an unlocking/activation signal to said airbag device when said backrest is returned to its upright adult passenger position.

Furthermore, said master controller may be further configured to coordinate operation of a seat sliding actuator, a backrest folding actuator and said actuator for pivoting the back lids in a manner timely coordinated with each other such that opening the back lids is initiated after the backrest has been fully or sufficiently folded toward its child seat position and the vehicle seat has been slit forwardly into or towards its child seat position, and to initiate pivoting of the backrest (16) from its child seat position back into its upright adult passenger position after said back lids (2; 3) have been fully or sufficiently closed.

At least one baby seat cushion may have a multi-layer structure including a first layer forming an airtight layer and a second layer made of anti-bacterial, breathable and soft material, said second layer forming a surface layer, wherein said second layer is preferably configured to be replaceable and washable.

These and other aspects and advantages become more apparent from the following description of an advantageous example of the invention shown in the figures, wherein the figures show:
- Fig. 1:: an isometric view of a vehicle seat including an integrated child seating system shown in a fully operational, unfolded configuration with a baby seated therein,
- Fig. 2:: an isometric view of the vehicle seat in an adult passenger configuration with an upright backrest and the child seating system folded and stored inside the backrest of the vehicle seat,
- Fig. 3:: a side view of the vehicle seat in the adult passenger configuration as shown in Fig. 2,
- Fig. 4:: an isometric view of the vehicle seat after having been moved forwardly and after having folded the backrest forwardly towards/onto the seat cushion to allow for unfolding the child seat system what has not been effected yet in Fig. 4,
- Fig. 5:: a side view showing the vehicle seat in the configuration of Fig. 4,
- Fig. 6:: an isometric view of the vehicle seat similar to Fig. 4, wherein pivotably supported back lids are shown on their pivoting way from the storage position as shown in Fig. 4 towards the unfolded position as shown in Fig. 8,
- Fig. 7:: a side view of the vehicle seat in the configuration as shown in Fig. 6,
- Fig. 8:: an isometric view of the vehicle seat with the back lids having been pivoted into their child seat positions,
- Fig. 9:: a side view of the vehicle seat in the configuration as shown in Fig. 8,
- Fig. 10:: an isometric view of the vehicle seat with the back lids being in the opened child seat position as shown in Fig. 8 and furthermore, showing the inflation of the inflatable seat cushions,
- Fig. 11:: a side view of the vehicle seat in a configuration as shown in Fig. 10,
- Fig. 12:: a top view of the vehicle seat in the child seat configuration with opened back lids and inflated child seat cushions as shown in Fig. 10,
- Fig. 13:: a schematic diagram showing the sequence of actions of an opening scenario of the child seat system, and
- Fig. 14:: a schematic diagram showing the sequence of actions of a closing scenario of the child seat system.

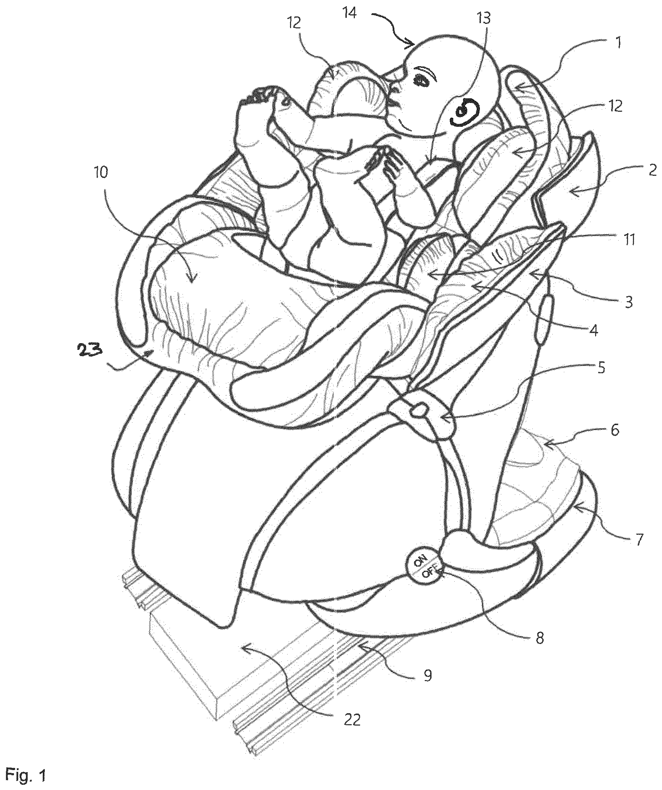

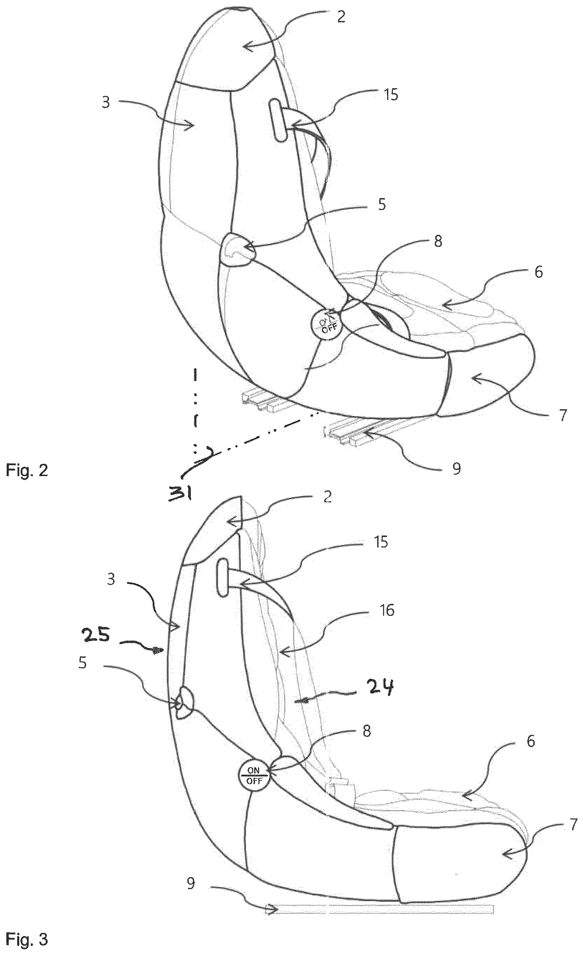

As shown by a comparison of figure 1 showing the vehicle seat of an automobile in a child seat configuration, with figures 2 and 3 showing the same vehicle seat in an adult passenger configuration, the vehicle seat includes an integrated child seat system which may be accommodated in the interior of the backrest 16 to be fully "hided" when the vehicle seat is in the adult passenger configuration.

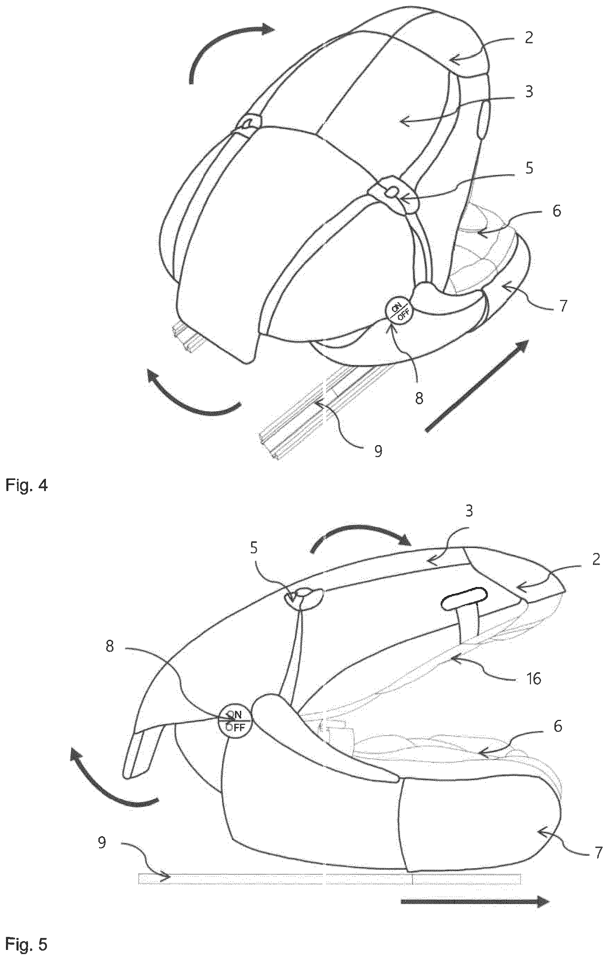

Some components 1, 4, 10, 11, 12, 13 and 17 of the baby seat are hidden in the back panels 2 and 3 of passenger seat as according to preamble of claim 2 and as illustrated in Fig.4. This invention allows the use of passenger seat as usual when baby 14 is not on board according to preamble of claim 3 and as illustrated in Fig.2.

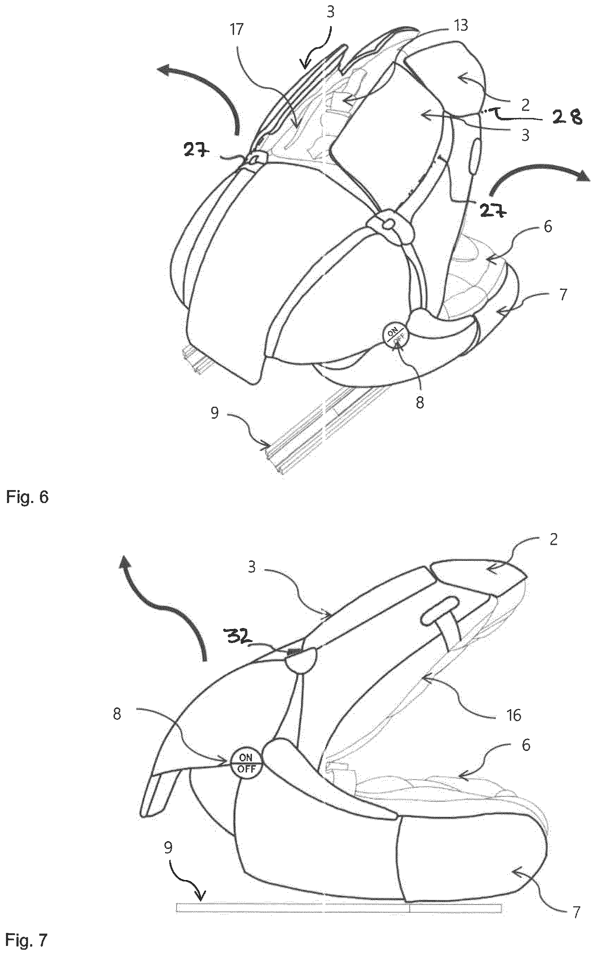

The opening sequence initiated by switching-on a button 8 (located on the right-hand side of the passenger seat, refer to Fig.1) giving the order to start operating the system 22 consists of mechanical and electrical parts to convert passenger seat into baby seat. During this operation, the front passenger airbag gets deactivated, the passenger seat moves to the front-end, the seat back rotates toward the dashboard as illustrated in Fig.4 and Fig.5, the seat back cover panels 2 and 3 start unfolding from the back of passenger seat, this move is performed using hidden electrical powered regulator motors which turn and rotate the metal arms and hinges to open and close the panels 2 and 3 start from all sides as illustrated Fig.6 and Fig.7.

These regulators are connected and attached to the passenger seat panels 2 and panels 3 inside the seat skeleton, this system is interconnected and work together and in parallel with the other systems in this product.

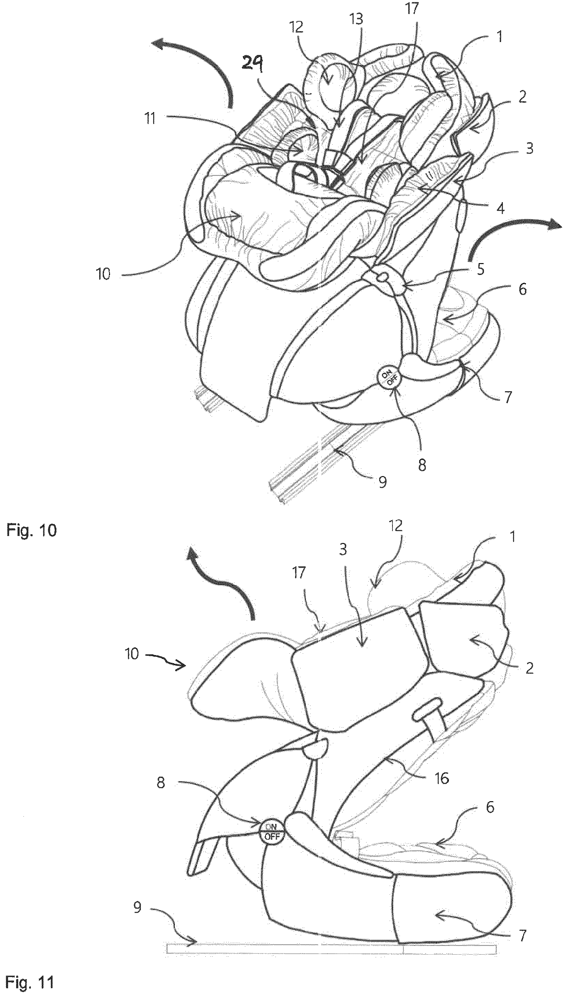

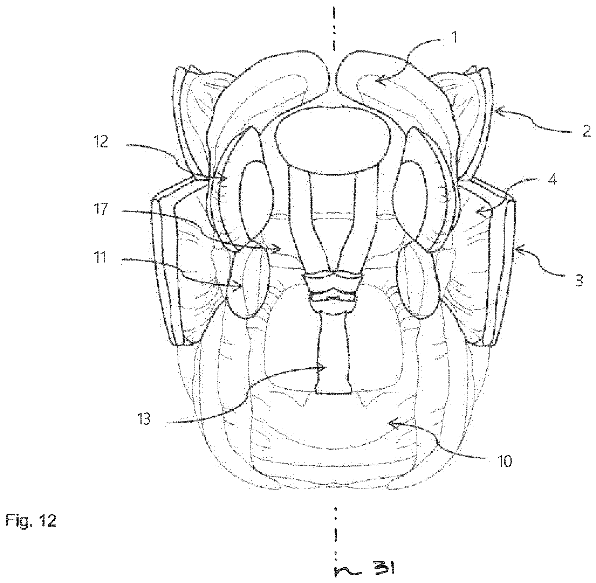

Subsequently, the compressed air pipe system starts running; the air-pump 18 blows the air inside the baby seat cushions 1, 4, 10, 11,12 and 17 to inflate until the baby seat reaches its final shape as illustrated in Fig.10, Fig11 and Fig12 ready to receive the baby 14 on board with baby seat belt 13 once this operation is completed.

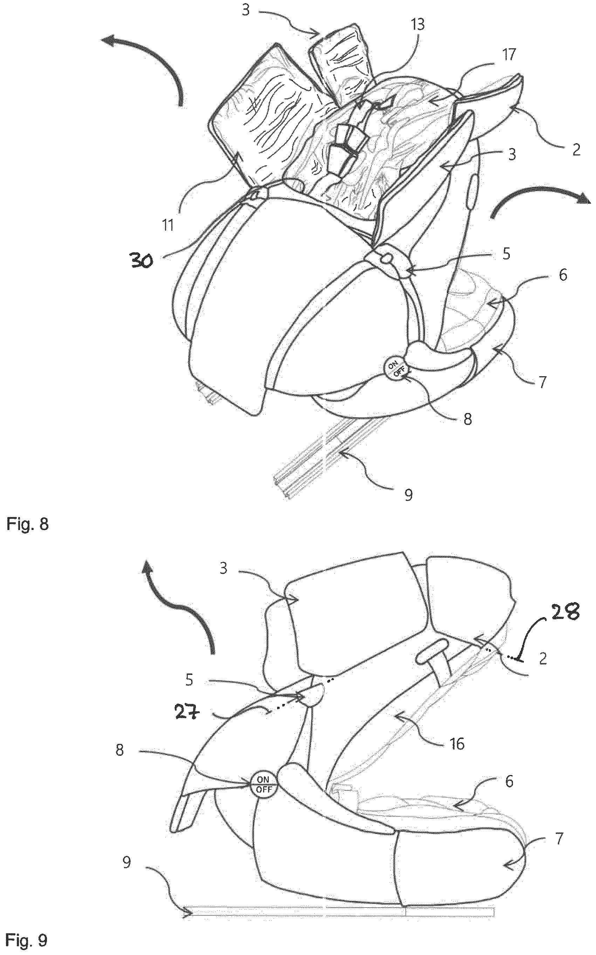

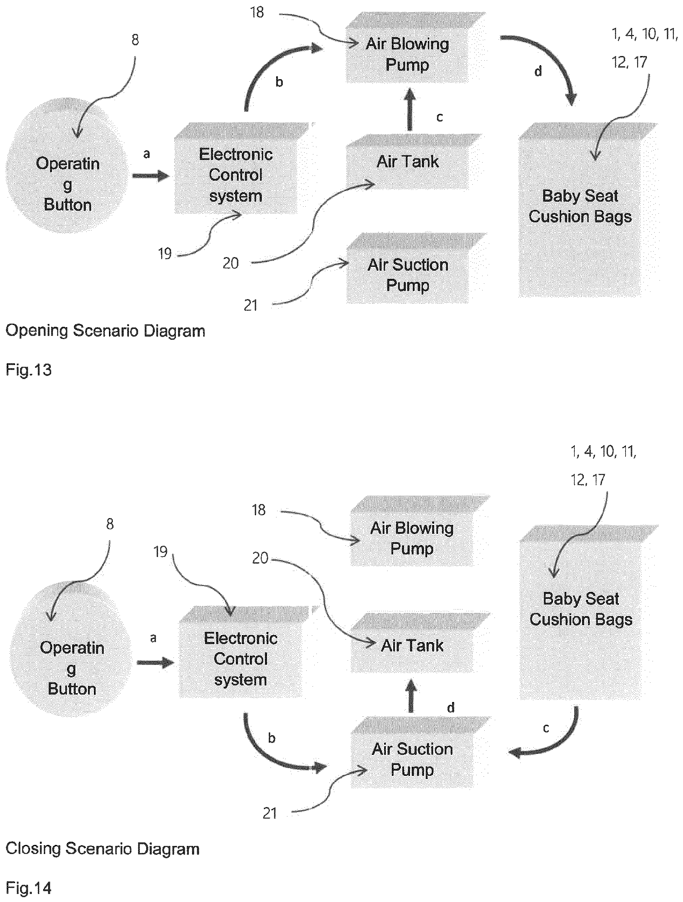

The closing sequence as illustrated in Fig.14 is the reverse of opening scenario as illustrated in Fig.13 which starts by switching off the same button 8 giving the order to start operating the system to deflate the baby seat cushions 1, 4, 10, 11, 12 and 17 and fold back the baby seat inside the back of the front passenger seat by closing of back seat panels 3 and 4. During this operation, the compressed air system starts running; the air- suction pump 21 starts sucking back the air from the baby seat cushions 1, 4, 10, 11,12 and 17into the air tank 20. The baby seat cushions get empty and take their original flat shape as illustrated in Fig.8, the back cover panels 3 and 4 start to fold back into its original shape and close the back of the passenger seat as illustrated in Fig.4, afterward, the passenger seat moves back from the front end and rotate back to its original position as illustrated in Fig.3 and Fig.4. Consequently, the front passenger airbag gets activated.

The baby seat components1, 4, 10, 11, 12, 13 and 17 consist of various materials, mechanical and electrical parts inserted, and assembled inside the back of front passenger seat. Enclosed container 22 box consists of air blowing and sucking system including all mechanical and electrical parts such as but not limited to, pipes, valves, electronic control units, electric cables, electronic boards, pump components, air tank parts etc. are located underneath the passenger seat as illustrated in Fig,1 .

The baby seat cushion bags 1, 4, 10, 11, 12 and 17 consist of two layers made of durable synthetic engineered fabric; the first layer of the cushions is designed to store the air, the second and top layer is engineered to be made of antibacterial material, breathable and filled with comfortable material to ensure maximum comfort and ergonomic for the baby when seated. This layer is interchangeable and can be washed and reinstalled when needed.

More particularly, as shown by the figures, the vehicle seat shows the following characteristics:
The seat comprises a backrest 16, a seat cushion 6 and a child seating system 23 integrated into said backrest 16, wherein said backrest 16 is configured to be foldable onto/towards said seat cushion 6 into a child seating position in which a front-side 24 of the backrest 16 faces said seat cushion 6 and a rear-side 25 of the backrest 16 is transformable to at least partly form said child seating system. The rear-side 25 of the backrest 16 is provided with at least one pair of back lids 2, 3 pivotally supported about pivot axes 27, 28 substantially parallel to the each other and spaced apart from each other to pivot from a storage position in which said back lids 2, 3 cover at least part of the child seating system in the interior of the backrest 16, to a child seating position in which said back lids 2, 3 form right and left side child supports projecting from the rear side 25 of the backrest 16 and extending along a child receiving recess 29 of the child seating system 23 in the rear-side 25 of the backrest 16.

Said pivot axes 27, 28 extend substantially parallel to and/or are symmetrically arranged relative to a virtual upright longitudinal center plane 31 of the vehicle seat, wherein said pivot axes 27, 28 are lying or substantially horizontal when said backrest 16 is in its folded configuration facing the seat cushion 6.

The rear-side 25 of the backrest 16 is provided with two pairs of back lids 2; 3, wherein each pair of said back lids 2; 3 is supported about a pair of pivot axes 27; 28 substantially parallel to each other and spaced apart from each other to pivot from a storage position to a child seat position and vice versa, wherein in said unfolded child seat position a first one of said pairs of back lids 2 forms right and left side supports for supporting a baby's head and a second one of said pairs of back lids 3 forms left and right side supports for a baby's torso.

The two pairs of back lids 2; 3, in their unfolded child seat position, differ from each other in terms of clearance between the right and left side supports and/or in terms of an opening angle defined between said left and right side supports.

The child seat system 23 includes at least one inflatable child seat cushion 1, 4, 10, 11, 12 which is, in a deflated storage configuration, accommodated in a storage recess 30 in the rear side 25 of the backrest 16 and is, in an inflated child seat configuration, forming a child seat cushion including a free-formed, sculptured support surface adapted to the anatomy of a child's body.

Said at least one inflatable child seat cushion 1, 4, 10, 11, 12 projects, in its inflated child seat configuration, from and over the rear side 25 of the backrest 16 and forms a bowl-shaped or trough-shaped child receiving recess 29 which is larger in area than and extends beyond the storage recess 30 in the rear side 25 of the backrest 16.

At least one inflatable child seat cushion 1, 4, 10, 11, 12 includes at least one of the following: at least one headrest cushion 1; 12, at least one pair of left and right side cushions 11, a torso cushion 10a and a leg/food cushion 10b.

At least one inflatable child seat cushion 4 is attached to said at least one pair of pivotably supported back lids 2, 3 to be inflated when said at least one pair of back lids 2, 3 is pivoted into its unfolded child seat configuration to form a pair of side cushions 11.

An inflation controller 22 is provided for controlling inflation of said at least one inflatable child seat cushion 1, 4, 10, 11, 12 in response to pivoting movement and/or pivoting position of said at least one pair of back lids 2, 3, wherein said inflation controller 22 is preferably configured to automatically inflate said at least one inflatable child seat cushion when said at least one pair of back lids 2, 3 are opened and/or pivoted towards their child seat position, and to deflate said at least one inflatable child seat cushion when said at least one pair of back lids 2, 3 is closed and/or pivoted towards their storage position.

Said or another inflation controller 22 is configured to provide for variable adjustment of inflation pressure inside the at least one inflatable child seat cushion 1, 4, 10, 11, 12 in the inflated child seat configuration thereof in response to a pressure control signal input via input means, wherein preferably said inflation controller 22 is configured to provide for independent adjustable inflation pressures in different ones of a plurality of inflatable child seat cushions 1, 4, 10, 11, 12.

An actuation unit 32 for automatic and/or motorized transformation of the backrest 16 from an adult passenger configuration to a child seat configuration includes at least one actuator for pivoting said at least one pair of back lids 2; 3 from their storage position into their child seat position and vice versa, and preferably at least another actuator for folding the backrest 16 from a substantially upright adult position towards/onto the seat cushion 6 into the child seat position and vice versa.

A master controller is provided for coordinating operation of the inflation controller 22 and the actuation unit 32 to coordinate inflation and/or deflation of said at least one inflatable child seat cushion in a manner timely coordinated with movement of said at least one pair of back lids 2, 3, wherein preferably said master controller is configured to initiate inflation of said at least one inflatable child seat cushion after said at least one pair of back lids 2; 3 has been fully or sufficiently opened and/or to initiate closing of said at least one pair of back lids 2; 3 after said at least one inflatable child seat cushion has been fully or sufficiently deflated.

Said master controller is configured to issue a deactivation signal to an airbag device when said backrest 16 is folded into its child seating position and to issue an unlocking/activation signal to said airbag device when said backrest 16 is returned to its upright adult passenger position.

Said master controller is further configured to coordinate operation of a seat sliding actuator, a backrest folding actuator and said actuator for pivoting the back lids 2; 3 in a manner timely coordinated with each other such that opening the back lids 2; 3 is initiated after the backrest 16 has been fully or sufficiently folded toward its child seat position and the vehicle seat has been slit forwardly into or towards its child seat position, and to initiate pivoting of the backrest (16) from its child seat position back into its upright adult passenger position after said back lids 2; 3 have been fully or sufficiently closed.

At least one baby seat cushion 1, 4, 10, 11, 12 has a multi-layer structure including a first layer forming an airtight layer and a second layer made of anti-bacterial, breathable and soft material, said second layer forming a surface layer, wherein said second layer is preferably configured to be replaceable and washable.

## Claims

1. A seat of a vehicle comprising a backrest (16), a seat cushion (6) and a child seating system (23) integrated into said backrest (16), wherein said backrest (16) is configured to be foldable onto/towards said seat cushion (6) into a child seating position in which a front-side (24) of the backrest (16) faces said seat cushion (6) and a rear-side (25) of the backrest (16) is transformable to at least partly form said child seating system, wherein the rear-side (25) of the backrest (16) is provided with at least one pair of back lids (2, 3) pivotally supported about pivot axes (27, 28) substantially parallel to the each other and spaced apart from each other to pivot from a storage position in which said back lids (2, 3) cover at least part of the child seating system in the interior of the backrest (16), to a child seating position in which said back lids (2, 3) form right and left side child supports projecting from the rear side (25) of the backrest (16) and extending along a child receiving recess (29) of the child seating system (23) in the rear-side (25) of the backrest (16), wherein said child seat system (23) includes at least one inflatable child seat cushion (1, 4, 10, 11, 12) which is, in a deflated storage configuration, accommodated in a storage recess (30) in the rear side (25) of the backrest (16) and is, in an inflated child seat configuration, forming a child seat cushion including a free-formed, sculptured support surface adapted to the anatomy of a child's body, **characterized in that** an actuation unit (32) for automatic and/or motorized transformation of the backrest (16) from an adult passenger configuration to a child seat configuration includes at least one actuator for pivoting said at least one pair of back lids (2; 3) from their storage position into their child seat position and vice versa, and at least another actuator for folding the backrest (16) from a substantially upright adult position towards/onto the seat cushion (6) into the child seat position and vice versa, wherein an inflation controller (22) is provided for controlling inflation of said at least one inflatable child seat cushion (1, 4, 10, 11, 12) in response to pivoting movement and/or pivoting position of said at least one pair of back lids (2, 3), wherein a master controller is provided for coordinating operation of the inflation controller (22) and the actuation unit (32) to coordinate inflation and/or deflation of said at least one inflatable child seat cushion in a manner timely coordinated with movement of said at least one pair of back lids (2, 3).

2. A vehicle seat according to the preceding claim, wherein said pivot axes (27, 28) extend substantially parallel to and/or are symmetrically arranged relative to a virtual upright longitudinal center plane (31) of the vehicle seat, wherein said pivot axes (27, 28) are lying or substantially horizontal when said backrest (16) is in its folded configuration facing the seat cushion (6).

3. A vehicle seat according to anyone of the preceding claims, wherein said rear-side (25) of the backrest (16) is provided with two pairs of back lids (2; 3), wherein each pair of said back lids (2; 3) is supported about a pair of pivot axes (27; 28) substantially parallel to each other and spaced apart from each other to pivot from a storage position to a child seat position and vice versa, wherein in said unfolded child seat position a first one of said pairs of back lids (2) forms right and left side supports for supporting a baby's head and a second one of said pairs of back lids (3) forms left and right side supports for a baby's torso.

4. A vehicle seat according to the preceding claim, wherein said two pairs of back lids (2; 3), in their unfolded child seat position, differ from each other in terms of clearance between the right and left side supports and/or in terms of an opening angle defined between said left and right side supports.

5. A vehicle seat according to anyone of the preceeding claims, wherein said at least one inflatable child seat cushion (1, 4, 10, 11, 12) projects, in its inflated child seat configuration, from and over the rear side (25) of the backrest (16) and forms a bowl-shaped or trough-shaped child receiving recess (29) which is larger in area than and extends beyond the storage recess (30) in the rear side (25) of the backrest (16).

6. A vehicle seat according to one of the two preceding claims, wherein said at least one inflatable child seat cushion (1, 4, 10, 11, 12) includes at least one of the following: at least one headrest cushion (1; 12), at least one pair of left and right side cushions (11), a torso cushion (10a) and a leg/food cushion (10b).

7. A vehicle seat according to anyone of the preceeding claims, wherein at least one inflatable child seat cushion (4) is attached to said at least one pair of pivotably supported back lids (2, 3) to be inflated when said at least one pair of back lids (2, 3) is pivoted into its unfolded child seat configuration to form a pair of side cushions (11).

8. A vehicle seat according to anyone of the preceeding claims, wherein said inflation controller (22) is configured to automatically inflate said at least one inflatable child seat cushion when said at least one pair of back lids (2, 3) are opened and/or pivoted towards their child seat position, and to deflate said at least one inflatable child seat cushion when said at least one pair of back lids (2, 3) is closed and/or pivoted towards their storage position.

9. A vehicle seat according to anyone of the preceeding claims, wherein said/an inflation controller (22) is configured to provide for variable adjustment of inflation pressure inside the at least one inflatable child seat cushion (1, 4, 10, 11, 12) in the inflated child seat configuration thereof in response to a pressure control signal input via input means, wherein preferably said inflation controller (22) is configured to provide for independent adjustable inflation pressures in different ones of a plurality of inflatable child seat cushions (1, 4, 10, 11, 12).

10. A vehicle seat according to anyone of the preceding claims, wherein said master controller is configured to initiate inflation of said at least one inflatable child seat cushion after said at least one pair of back lids (2; 3) has been fully or sufficiently opened and/or to initiate closing of said at least one pair of back lids (2; 3) after said at least one inflatable child seat cushion has been fully or sufficiently deflated.

11. A vehicle seat according to the preceding claim, wherein said master controller is configured to issue a deactivation signal to an airbag device when said backrest (16) is folded into its child seating position and to issue an unlocking/activation signal to said airbag device when said backrest (16) is returned to its upright adult passenger position.

12. A vehicle seat according to anyone of the two preceding claims, wherein said master controller is further configured to coordinate operation of a seat sliding actuator, a backrest folding actuator and said actuator for pivoting the back lids (2; 3) in a manner timely coordinated with each other such that opening the back lids (2; 3) is initiated after the backrest (16) has been fully or sufficiently folded toward its child seat position and the vehicle seat has been slit forwardly into or towards its child seat position, and to initiate pivoting of the backrest (16) from its child seat position back into its upright adult passenger position after said back lids (2; 3) have been fully or sufficiently closed.

13. A vehicle seat according to anyone of the preceding claims, wherein at least one baby seat cushion (1, 4, 10, 11, 12) has a multi-layer structure including a first layer forming an airtight layer and a second layer made of anti-bacterial, breathable and soft material, said second layer forming a surface layer, wherein said second layer is preferably configured to be replaceable and washable.

## Patentansprüche

1. Sitz eines Fahrzeugs, umfassend eine Rückenlehne (16), ein Sitzpolster (6) und ein in die Rückenlehne (16) integriertes Kindersitzsystem (23), wobei die Rückenlehne (16) so ausgebildet ist, dass sie auf/zu das Sitzpolster (6) hin in eine Kindersitzposition klappbar ist, in der eine Vorderseite (24) der Rückenlehne (16) dem Sitzpolster (6) zugewandt ist und eine Rückseite (25) der Rückenlehne (16) umformbar ist, um zumindest teilweise das Kindersitzsystem zu bilden, wobei die Rückseite (25) der Rückenlehne (16) mit zumindest einem Paar von Rückenklappen (2, 3) versehen ist, die schwenkbar um Schwenkachsen (27, 28) gelagert sind, die im Wesentlichen parallel zueinander verlaufen und voneinander beabstandet sind, um von einer Aufbewahrungsposition, in der die Rückenklappen (2, 3) zumindest einen Teil des Kindersitzsystems im Inneren der Rückenlehne (16) abdecken, in eine Kindersitzposition zu schwenken, in der die Rückenklappen (2, 3) rechte und linke seitliche Kinderstützen bilden, die von der Rückseite (25) der Rückenlehne (16) abstehen und sich entlang einer Kindaufnahmemulde (29) des Kindersitzsystems (23) in der Rückseite (25) der Rückenlehne (16) erstrecken, wobei das Kindersitzsystem (23) zumindest ein aufblasbares Kindersitzpolster (1, 4, 10, 11, 12) umfasst, das in einer entleerten Aufbewahrungskonfiguration in einer Aufbewahrungsausnehmung (30) in der Rückseite (25) der Rückenlehne (16) aufgenommen ist und in einer aufgeblasenen Kindersitzkonfiguration ein Kindersitzpolster bildet, das eine frei geformte, skulpturierte Stützfläche umfasst, die an die Anatomie eines Kinderkörpers angepasst ist, **dadurch gekennzeichnet, dass** eine Betätigungseinheit (32) zur automatischen und/oder motorisierten Umwandlung der Rückenlehne (16) von einer Erwachsenenpassagierkonfiguration in eine Kindersitzkonfiguration zumindest einen Aktuator zum Schwenken des zumindest einen Paars Rückenklappen (2; 3) von ihrer Aufbewahrungsposition in ihre Kindersitzposition und umgekehrt umfasst, und zumindest einen weiteren Aktuator zum Klappen der Rückenlehne (16) von einer im Wesentlichen aufrechten Erwachsenenposition zum/auf das Sitzpolster (6) in die Kindersitzposition und umgekehrt, wobei ein Inflationssteuergerät (22) vorgesehen ist zum Steuern des Aufblasens des zumindest einen aufblasbaren Kindersitzpolsters (1, 4, 10, 11, 12) in Reaktion auf die Schwenkbewegung und/oder Schwenkposition des zumindest einen Paars Rückenklappen (2, 3), wobei ein Master-Steuergerät vorgesehen ist zur Koordination des Betriebs des Inflationssteuergeräts (22) und der Betätigungseinheit (32), um das Aufblasen und/oder Entleeren des zumindest einen aufblasbaren Kindersitzpolsters in einer zeitlich mit der Bewegung des zumindest einen Paars Rückenklappen (2, 3) koordinierten Weise zu koordinieren.

2. Fahrzeugsitz nach dem vorhergehenden Anspruch, wobei sich die Schwenkachsen (27, 28) im Wesentlichen parallel zu und/oder symmetrisch relativ zu einer virtuellen aufrechten Längsmittelebene (31) des Fahrzeugsitzes erstrecken, wobei die Schwenkachsen (27, 28) liegend oder im Wesentlichen horizontal sind, wenn die Rückenlehne (16) in ihrer gefalteten Konfiguration dem Sitzpolster (6) zugewandt ist.

3. Fahrzeugsitz nach einem der vorhergehenden Ansprüche, wobei die Rückseite (25) der Rückenlehne (16) mit zwei Paaren von Rückenklappen (2; 3) versehen ist, wobei jedes Paar der Rückenklappen (2; 3) um ein Paar von Schwenkachsen (27; 28) gelagert ist, die im Wesentlichen parallel zueinander verlaufen und voneinander beabstandet sind, um von einer Aufbewahrungsposition in eine Kindersitzposition und umgekehrt zu schwenken, wobei in der entfalteten Kindersitzposition ein erstes der Paare von Rückenklappen (2) rechte und linke Seitenstützen zur Unterstützung des Kopfes eines Babys bildet und ein zweites der Paare von Rückenklappen (3) linke und rechte Seitenstützen für den Oberkörper eines Babys bildet.

4. Fahrzeugsitz nach dem vorhergehenden Anspruch, wobei die zwei Paare von Rückenklappen (2; 3) sich in ihrer entfalteten Kindersitzposition voneinander unterscheiden hinsichtlich des Abstands zwischen den rechten und linken Seitenstützen und/oder hinsichtlich eines Öffnungswinkels, der zwischen den linken und rechten Seitenstützen definiert ist.

5. Fahrzeugsitz nach einem der vorhergehenden Ansprüche, wobei das zumindest eine aufblasbare Kindersitzpolster (1, 4, 10, 11, 12) in seiner aufgeblasenen Kindersitzkonfiguration von und über die Rückseite (25) der Rückenlehne (16) hervorsteht und eine schalenförmige oder wannenförmige Kindaufnahmemulde (29) bildet, die flächenmäßig größer ist als und sich über die Aufbewahrungsausnehmung (30) in der Rückseite (25) der Rückenlehne (16) hinaus erstreckt.

6. Fahrzeugsitz nach einem der zwei vorhergehenden Ansprüche, wobei das zumindest eine aufblasbare Kindersitzpolster (1, 4, 10, 11, 12) zumindest eines der folgenden umfasst: zumindest ein Kopfstützenpolster (1; 12), zumindest ein Paar aus linkem und rechtem Seitenpolster (11), ein Oberkörperpolster (10a) und ein Bein-/Fußpolster (10b).

7. Fahrzeugsitz nach einem der vorhergehenden Ansprüche, wobei zumindest ein aufblasbares Kindersitzpolster (4) an das zumindest eine Paar schwenkbar gelagerter Rückenklappen (2, 3) befestigt ist, um aufgeblasen zu werden, wenn das zumindest eine Paar Rückenklappen (2, 3) in seine entfaltete Kindersitzkonfiguration geschwenkt wird, um ein Paar Seitenpolster (11) zu bilden.

8. Fahrzeugsitz nach einem der vorhergehenden Ansprüche, wobei das Inflationssteuergerät (22) so ausgebildet ist, dass es das zumindest eine aufblasbare Kindersitzpolster automatisch aufbläst, wenn das zumindest eine Paar Rückenklappen (2, 3) geöffnet und/oder zu ihrer Kindersitzposition hin geschwenkt wird, und das zumindest eine aufblasbare Kindersitzpolster entleert, wenn das zumindest eine Paar Rückenklappen (2, 3) geschlossen und/oder zu ihrer Aufbewahrungsposition hin geschwenkt wird.

9. Fahrzeugsitz nach einem der vorhergehenden Ansprüche, wobei das/ein Inflationssteuergerät (22) so ausgebildet ist, dass es eine variable Einstellung des Aufblasdrucks innerhalb des zumindest einen aufblasbaren Kindersitzpolsters (1, 4, 10, 11, 12) in dessen aufgeblasener Kindersitzkonfiguration in Reaktion auf ein über Eingabemittel eingegebenes Drucksteuersignal bereitstellt, wobei das Inflationssteuergerät (22) vorzugsweise so ausgebildet ist, dass es unabhängig einstellbare Aufblasdrücke in unterschiedlichen Polstern einer Mehrzahl aufblasbarer Kindersitzpolster (1, 4, 10, 11, 12) bereitstellt.

10. Fahrzeugsitz nach einem der vorhergehenden Ansprüche, wobei das Master-Steuergerät so ausgebildet ist, das Aufblasen des zumindest einen aufblasbaren Kindersitzpolsters einzuleiten, nachdem das zumindest eine Paar Rückenklappen (2; 3) vollständig oder ausreichend geöffnet wurde, und/oder das Schließen des zumindest einen Paars Rückenklappen (2; 3) einzuleiten, nachdem das zumindest eine aufblasbare Kindersitzpolster vollständig oder ausreichend entleert wurde.

11. Fahrzeugsitz nach dem vorhergehenden Anspruch, wobei das Master-Steuergerät so ausgebildet ist, ein Deaktivierungssignal an eine Airbagvorrichtung auszugeben, wenn die Rückenlehne (16) in ihre Kindersitzposition geklappt ist, und ein Entriegelungs-/Aktivierungssignal an die Airbagvorrichtung auszugeben, wenn die Rückenlehne (16) in ihre aufrechte Erwachsenenpassagierposition zurückgeführt wird.

12. Fahrzeugsitz nach einem der zwei vorhergehenden Ansprüche, wobei das Master-Steuergerät weiter so ausgebildet ist, den Betrieb eines Sitzverschiebeaktors, eines Rückenlehnen-Faltaktors und des Aktuators zum Schwenken der Rückenklappen (2; 3) in zeitlich miteinander koordinierter Weise zu koordinieren, sodass das Öffnen der Rückenklappen (2; 3) eingeleitet wird, nachdem die Rückenlehne (16) vollständig oder ausreichend zu ihrer Kindersitzposition hin geklappt wurde und der Fahrzeugsitz nach vorne in oder zu seiner Kindersitzposition hin verschoben wurde, und das Schwenken der Rückenlehne (16) aus ihrer Kindersitzposition zurück in ihre aufrechte Erwachsenenpassagierposition einzuleiten, nachdem die Rückenklappen (2; 3) vollständig oder ausreichend geschlossen wurden.

13. Fahrzeugsitz nach einem der vorhergehenden Ansprüche, wobei zumindest ein Babysitzpolster (1, 4, 10, 11, 12) eine Mehrschichtstruktur aufweist, die eine erste Schicht umfasst, die eine luftdichte Schicht bildet, und eine zweite Schicht aus antibakteriellem, atmungsaktivem und weichem Material, wobei die zweite Schicht eine Oberflächenschicht bildet, wobei die zweite Schicht vorzugsweise so ausgebildet ist, dass sie austauschbar und waschbar ist.

## Revendications

1. Siège de véhicule comprenant un dossier (16), un coussin d'assise (6) et un système de siège enfant (23) intégré dans ledit dossier (16), ledit dossier (16) étant configuré pour pouvoir être rabattu sur/vers ledit coussin d'assise (6) dans une position de siège enfant dans laquelle une face avant (24) du dossier (16) fait face audit coussin d'assise (6) et une face arrière (25) du dossier (16) est transformable de manière à former au moins partiellement ledit système de siège enfant, la face arrière (25) du dossier (16) étant pourvue d'au moins une paire de volets arrière (2, 3) montés pivotants autour d'axes de pivotement (27, 28) sensiblement parallèles l'un à l'autre et espacés l'un de l'autre pour pivoter d'une position de rangement dans laquelle lesdits volets arrière (2, 3) recouvrent au moins une partie du système de siège enfant à l'intérieur du dossier (16), vers une position de siège enfant dans laquelle lesdits volets arrière (2, 3) forment des supports latéraux droit et gauche pour enfant faisant saillie à partir de la face arrière (25) du dossier (16) et s'étendant le long d'un évidement de réception de l'enfant (29) du système de siège enfant (23) dans la face arrière (25) du dossier (16), ledit système de siège enfant (23) comprenant au moins un coussin gonflable de siège enfant (1, 4, 10, 11, 12) qui, dans une configuration de rangement dégonflée, est logé dans un évidement de rangement (30) dans la face arrière (25) du dossier (16) et qui, dans une configuration gonflée de siège enfant, forme un coussin de siège enfant comprenant une surface d'appui sculptée à forme libre, adaptée à l'anatomie du corps d'un enfant, **caractérisé en ce qu'**une unité d'actionnement (32) destinée à la transformation automatique et/ou motorisée du dossier (16) d'une configuration pour passager adulte vers une configuration de siège enfant comprend au moins un actionneur pour faire pivoter ladite au moins une paire de volets arrière (2 ; 3) de leur position de rangement vers leur position de siège enfant et inversement, et au moins un autre actionneur pour rabattre le dossier (16) depuis une position adulte sensiblement verticale vers/sur le coussin d'assise (6) jusque dans la position de siège enfant et inversement, un contrôleur de gonflage (22) étant prévu pour commander le gonflage dudit au moins un coussin gonflable de siège enfant (1, 4, 10, 11, 12) en réponse au mouvement de pivotement et/ou à la position de pivotement de ladite au moins une paire de volets arrière (2, 3), un contrôleur maître étant prévu pour coordonner le fonctionnement du contrôleur de gonflage (22) et de l'unité d'actionnement (32) afin de coordonner le gonflage et/ou le dégonflage dudit au moins un coussin gonflable de siège enfant d'une manière temporellement coordonnée avec le mouvement de ladite au moins une paire de volets arrière (2, 3).

2. Siège de véhicule selon la revendication précédente, dans lequel lesdits axes de pivotement (27, 28) s'étendent sensiblement parallèlement à un plan médian longitudinal vertical virtuel (31) du siège de véhicule et/ou sont disposés symétriquement par rapport à celui-ci, lesdits axes de pivotement (27, 28) étant couchés ou sensiblement horizontaux lorsque ledit dossier (16) est dans sa configuration rabattue faisant face au coussin d'assise (6).

3. Siège de véhicule selon l'une quelconque des revendications précédentes, dans lequel ladite face arrière (25) du dossier (16) est pourvue de deux paires de volets arrière (2 ; 3), chaque paire desdits volets arrière (2 ; 3) étant montée autour d'une paire d'axes de pivotement (27 ; 28) sensiblement parallèles l'un à l'autre et espacés l'un de l'autre pour pivoter d'une position de rangement vers une position de siège enfant et inversement, dans lequel, dans ladite position déployée de siège enfant, une première desdites paires de volets arrière (2) forme des supports latéraux droit et gauche destinés à soutenir la tête d'un bébé et une seconde desdites paires de volets arrière (3) forme des supports latéraux gauche et droit pour le torse d'un bébé.

4. Siège de véhicule selon la revendication précédente, dans lequel lesdites deux paires de volets arrière (2 ; 3), dans leur position déployée de siège enfant, diffèrent l'une de l'autre en termes d'écartement entre les supports latéraux droit et gauche et/ou en termes d'angle d'ouverture défini entre lesdits supports latéraux gauche et droit.

5. Siège de véhicule selon l'une quelconque des revendications précédentes, dans lequel ledit au moins un coussin gonflable de siège enfant (1, 4, 10, 11, 12) fait saillie, dans sa configuration gonflée de siège enfant, à partir de et au-delà de la face arrière (25) du dossier (16) et forme un évidement de réception de l'enfant (29) en forme de cuvette ou de gouttière, qui est plus grand en surface que l'évidement de rangement (30) dans la face arrière (25) du dossier (16) et s'étend au-delà de celui-ci.

6. Siège de véhicule selon l'une des deux revendications précédentes, dans lequel ledit au moins un coussin gonflable de siège enfant (1, 4, 10, 11, 12) comprend au moins l'un des éléments suivants : au moins un coussin d'appui-tête (1 ; 12), au moins une paire de coussins latéraux gauche et droit (11), un coussin de torse (10a) et un coussin de jambes/pieds (10b).

7. Siège de véhicule selon l'une quelconque des revendications précédentes, dans lequel au moins un coussin gonflable de siège enfant (4) est fixé à ladite au moins une paire de volets arrière montés pivotants (2, 3) de manière à être gonflé lorsque ladite au moins une paire de volets arrière (2, 3) est pivotée dans sa configuration déployée de siège enfant, afin de former une paire de coussins latéraux (11).

8. Siège de véhicule selon l'une quelconque des revendications précédentes, dans lequel ledit contrôleur de gonflage (22) est configuré pour gonfler automatiquement ledit au moins un coussin gonflable de siège enfant lorsque ladite au moins une paire de volets arrière (2, 3) est ouverte et/ou pivotée vers sa position de siège enfant, et pour dégonfler ledit au moins un coussin gonflable de siège enfant lorsque ladite au moins une paire de volets arrière (2, 3) est fermée et/ou pivotée vers sa position de rangement.

9. Siège de véhicule selon l'une quelconque des revendications précédentes, dans lequel ledit/un contrôleur de gonflage (22) est configuré pour permettre un réglage variable de la pression de gonflage à l'intérieur dudit au moins un coussin gonflable de siège enfant (1, 4, 10, 11, 12) dans sa configuration gonflée de siège enfant en réponse à un signal de commande de pression introduit via des moyens d'entrée, ledit contrôleur de gonflage (22) étant de préférence configuré pour permettre des pressions de gonflage réglables indépendamment dans différents coussins, parmi une pluralité de coussins gonflables de siège enfant (1, 4, 10, 11, 12).

10. Siège de véhicule selon l'une quelconque des revendications précédentes, dans lequel ledit contrôleur maître est configuré pour initier le gonflage dudit au moins un coussin gonflable de siège enfant après que ladite au moins une paire de volets arrière (2 ; 3) a été entièrement ou suffisamment ouverte et/ou pour initier la fermeture de ladite au moins une paire de volets arrière (2 ; 3) après que ledit au moins un coussin gonflable de siège enfant a été entièrement ou suffisamment dégonflé.

11. Siège de véhicule selon la revendication précédente, dans lequel ledit contrôleur maître est configuré pour émettre un signal de désactivation vers un dispositif d'airbag lorsque ledit dossier (16) est rabattu dans sa position de siège enfant et pour émettre un signal de déverrouillage/d'activation vers ledit dispositif d'airbag lorsque ledit dossier (16) est ramené dans sa position verticale pour passager adulte.

12. Siège de véhicule selon l'une quelconque des deux revendications précédentes, dans lequel ledit contrôleur maître est en outre configuré pour coordonner le fonctionnement d'un actionneur de coulissement du siège, d'un actionneur de rabattement du dossier et dudit actionneur destiné au pivotement des volets arrière (2 ; 3), d'une manière temporellement coordonnée entre eux, de telle sorte que l'ouverture des volets arrière (2 ; 3) est initiée après que le dossier (16) a été entièrement ou suffisamment rabattu vers sa position de siège enfant et que le siège du véhicule a été déplacé vers l'avant dans ou vers sa position de siège enfant, et pour initier le pivotement du dossier (16) depuis sa position de siège enfant vers sa position verticale de passager adulte après que lesdits volets arrière (2 ; 3) ont été entièrement ou suffisamment fermés.

13. Siège de véhicule selon l'une quelconque des revendications précédentes, dans lequel au moins un coussin de siège pour bébé (1, 4, 10, 11, 12) présente une structure multicouche comprenant une première couche formant une couche étanche à l'air et une seconde couche réalisée en matériau antibactérien, respirant et souple, ladite seconde couche formant une couche de surface, ladite seconde couche étant de préférence configurée pour être remplaçable et lavable.
